## Europäisches Patentamt
## European Patent Office
## Office européen des brevets

(19)

(11) Veröffentlichungsnummer: **0 141 112**
**A1**

(12) # EUROPÄISCHE PATENTANMELDUNG

(21) Anmeldenummer: **84110042.3**

(22) Anmeldetag: **23.08.84**

(51) Int. Cl.⁴: **G 11 B 23/023**

(30) Priorität: **29.08.83 EP 83108480**

(43) Veröffentlichungstag der Anmeldung:
**15.05.85 Patentblatt 85/20**

(84) Benannte Vertragsstaaten:
**DE FR GB IT SE**

(71) Anmelder: **idn inventions and development of novelties ag**
**Hartbertstrasse 9**
**CH-7002 Chur(CH)**

(72) Erfinder: **Ackeret, Peter**
**Allmendstr. 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Anordnung zum Aufbewahren von Compactkassetten oder Compactdiscs.**

(57) Es wird ein Modulsystem vorgeschlagen, bestehend aus Gehäusen gleicher Aussenabmessungen und Gestalt, in denen jedoch entweder Compactkassetten oder Compact-discs oder auch Mikrokassetten jeweils in Schiebern untergebracht mit optimaler Nutzung des Gehäuseinnen-raums aufbewahrt werden können. Für den Einbau in Kraft-fahrzeuge gehört dazu ein Adapter, der die Montage erleich-tert und den Austausch unterschiedlicher Behälter gegeneinander ermöglicht. Zum Aufbau von Archiven sind die Gehäuse miteinander stapelbar.

EP 0 141 112 A1

./...

Fig.20

Anordnung zum Aufbewahren von Compactkassetten    49/97-E

oder Compactdiscs

--------------------------------------------------------

Die Erfindung betrifft eine Anordnung zum Aufbewahren von Compactkassetten oder Compactdiscs.

Ein Kassettenbehälter mit den im Oberbegriff des Patentanspruchs 1 genannten Merkmalen ist aus der DE-A-22 48 408 bekannt. Dieser bekannte Behälter ist auch zum Mitführen im Kraftfahrzeug geeignet insofern, als einerseits das im Behälter untergebrachte Gut so geschützt ist, daß es auch den harten mechanischen Beanspruchungen während der Fahrt gewachsen ist und andererseits der Behälter komfortabel bedienbar ist, das heißt mit einer Hand und ohne daß der Benutzer hinzusehen braucht.

Viele Kraftfahrzeughersteller rüsten ab Werk oder ab Händler ihre Produkte bereits mit einem Block solcher Behälter aus, für den in der Innenverkleidung des Fahrzeugs eine entsprechende Aussparung vorgesehen ist.

Während die handelsüblichen, standardisierten Magnetbandkassetten (sogenannte "Compactkassetten") seit Jahren eingeführt sind und auch noch auf Jahre hinaus ihren Markt behalten werden, gibt es auf dem Sektor der Ton- Bilddatenabspeicherung neue, modernere Medien, insbesondere die laserabtastbare Schall- oder Bildplatte (sogenannte "Compactdiscs"), die der Compactkassette qualitativ weit überlegen ist.

Es ist zu erwarten, daß zumindest während einer längeren Übergangsfrist in Kraftfahrzeugen einbaubare Abspielgeräte für Compactkassetten oder aber für Compactdiscs angeboten werden. Wenn, wie meist, der Einbau durch den Händler erfolgt, befindet sich der Kraftfahrzeughersteller in Verlegenheit, weil er nicht voraussagen kann, welchen Typ der spätere Kunde wünschen wird, so daß er gegebenenfalls unterschiedlich gestaltete Varianten der Innenverkleidung entwickeln, fertigen und anbieten muß.

Dabei ist zu bedenken, daß neben den beiden erwähnten Systemen auch noch Abspielgeräte für Mikrokassetten angeboten werden, und es ist nicht vorhersehbar, ob sich nicht diese -- eventuell wiederum nur während einer Übergangszeit -- in Kraftfahrzeugen durchsetzen oder zumindest neben den beiden andern Systemen verlangt werden. Schließlich kann es auch noch vorkommen, daß ein Käufer zunächst das eine System einbauen läßt, später aber auf ein anderes übergehen will.

Aufgabe der vorliegenden Erfindung ist es, eine Anordnung zum Aufbewahren von wahlweise Compactkassetten oder Compactdiscs zu schaffen, bei der die oben geschilderte Problematik entfällt.

Diese Aufgabe wird gemäß der Erfindung durch die im kennzeichnenden Teil des Patentanspruchs 1 genannten Merkmale gelöst. Demgemäß besitzen die Gehäuse, gleichgültig ob sie Schieber für Compactkassetten oder für Compactdiscs enthalten, gleiche Außenabmessungen, an die der Kraftfahrzeughersteller seine Innenverkleidungen anpassen kann. Zugleich wird dabei der in Fahrzeugen knappe Platz optimal genutzt, und die von den bekannten Behältern her gewohnte bequeme Bedienbarkeit bleibt erhalten.

0141112

Berücksichtigt man noch die Weiterbildung gemäß Patentanspruch 5, so ist auch den Anforderungen bei Mikrokassettensystemen Rechnung getragen, und bei entsprechender Gestaltung der Innenverkleidung sind Kraftfahrzeughersteller und -händler auf alle Eventualitäten vorbereitet.

Wenn auch die hier wohl erstmals erkannte Problematik spezifisch für Abspielsysteme in Kraftfahrzeugen auftritt, so ist die Verwendung der erfindungsgemäßen Anordnung keinesfalls auf solche beschränkt; selbstverständlich kann sie auch stationär benutzt werden.

In diesem Falle empfiehlt es sich, auch Vorsorge für die Anpassung des Systems an moderne Bildaufzeichnungskassetten zu treffen, die sogenannten "8mm-Videokassetten". Alternativ zu der Gestaltung nach Anspruch 1 kann man dann einen modularen Aufbau gemäß Anspruch 24 wählen, wobei -- da die Abmessungen von Compactkassetten und VC-8-Kassetten weitgehend übereinstimmen -- das System zugleich für beide geeignet ist.

Soweit in den Patentansprüchen 1 und 24 die Abmessungen des Gehäuses als denen der aufzubewahrenden Aufzeichnungsträger "entsprechend" definiert sind, versteht es sich, daß dies nicht etwa Identität bedeutet, sondern daß natürlich die jeweiligen Schieberabmessungen und Führungen, Ausschubfederanordnungen usw. noch hinzukommen.

Die beigefügten Zeichnungen stellen bevorzugte Ausführungsbeispiele des Gegenstandes der Erfindung dar.

Fig. 1A    zeigt die Anordnung für Compactdiscs schematisch im Grundriß,

Fig. 1B    zeigt entsprechend die Anordnung für Compactkassetten,

Fig. 1C    zeigt entsprechend die Anordnung für Mikrokassetten,

Fig. 2A bis 2C    stellen entsprechend schematisiert die Frontansicht dar,

Fig. 3A bis 3C    stellen entsprechend schematisiert Seitenansichten dar,

0141112

Fig. 4 zeigt in perspektivischer Explosionsdarstellung den Einbau einer Anordnung gemäß der Erfindung in einen in einer Kraftfahrzeugverkleidung vorgesehenen Hohlraum,

Fig. 5 ist eine perspektivische Teildarstellung einer abgewandelten Ausführungsform,

Fig. 6 bis 8 zeigen perspektivisch verschiedene Blenden, und

Fig. 9 ist eine Teilschnittdarstellung zur Erläuterung der Montage der Ausführungsform nach Fig. 5,

Fig. 10 zeigt in perspektivischer Explosionsdarstellung eine Abwandlung der erfindungsgemässen Anordnung,

Fig. 11 ist eine zugehörige schematische Seitenansicht,

Fig. 12 zeigt im Schnitt senkrecht zu einer Schwenkachse eine ähnlich abgewandelte Anordnung,

Fig. 13 ist eine schematisierte Draufsicht auf den Fuss aus Fig. 12,

Fig. 14 zeigt im Teilvertikalschnitt eine weitere Abwandlung der Anordnung gemäss der Erfindung,

Fig. 15 ist eine Teilendansicht zu Fig. 14,

Fig. 16 stellt in Seitenansicht einen Befestigungswinkel zu Fig. 14 dar,

Fig. 17 zeigt den Befestigungswinkel in Frontansicht, und

Fig. 18 und 19 dienen der Erläuterung von Montagevorgängen.

Fig. 20 zeigt schematisch eine weitere erfindungsgemäße Anordnung,

Fig. 21a, b, c zeigen jeweils in schematisierter Schnittdarstellung den Aufbau des jeweiligen Blocks,

Fig. 22 zeigt schematisch eine Blockbildung aus Compactkassetten- und Compactdisc-Behältern,

Fig. 23 ist eine zugehörige schematisierte Schnittdarstellung, und

Fig. 24 zeigt das entsprechende Stapelsystem.

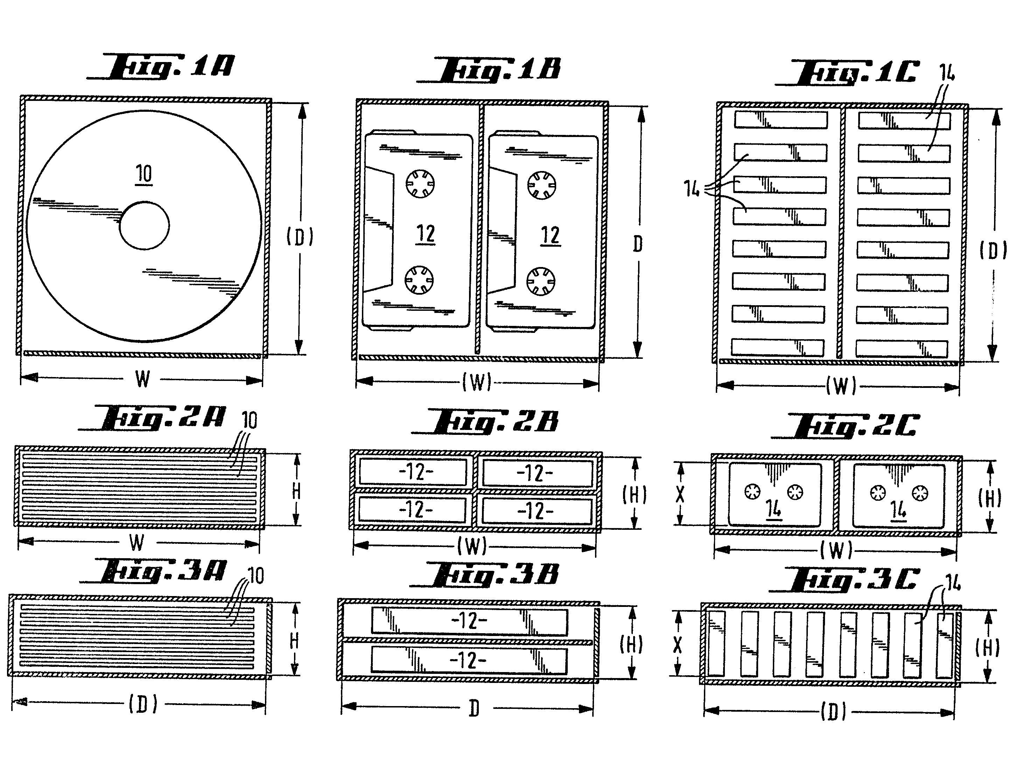

Man erkennt in Fig. 1A bis 1C den Gehäusegrundriß mit Gehäusebreite "W", Gehäusetiefe "D" und die Tatsache, daß diese Abmessungen durch den Durchmesser der Compactdisc 10 festgelegt sind; für die Compactkassetten 12 könnte des Gehäuse eine geringere Tiefe D haben und für eine gewisse Anzahl von Mikrokassetten 14, zum Beispiel sechs oder acht, könnte das Gehäuse noch viel kürzer sein.

Fig. 2A bis 2C lassen die Höhe "H" des Gehäuses erkennen, die hier durch die Abmessung "X" der Mikrokassetten festgelegt ist; diese Höhe H genügt für zwei Paare von Compactkassetten oder acht übereinanderliegende Compactdiscs.

Die Seitenansichten nach Fig. 3A bis 3C ergeben sich nun zwangsläufig.

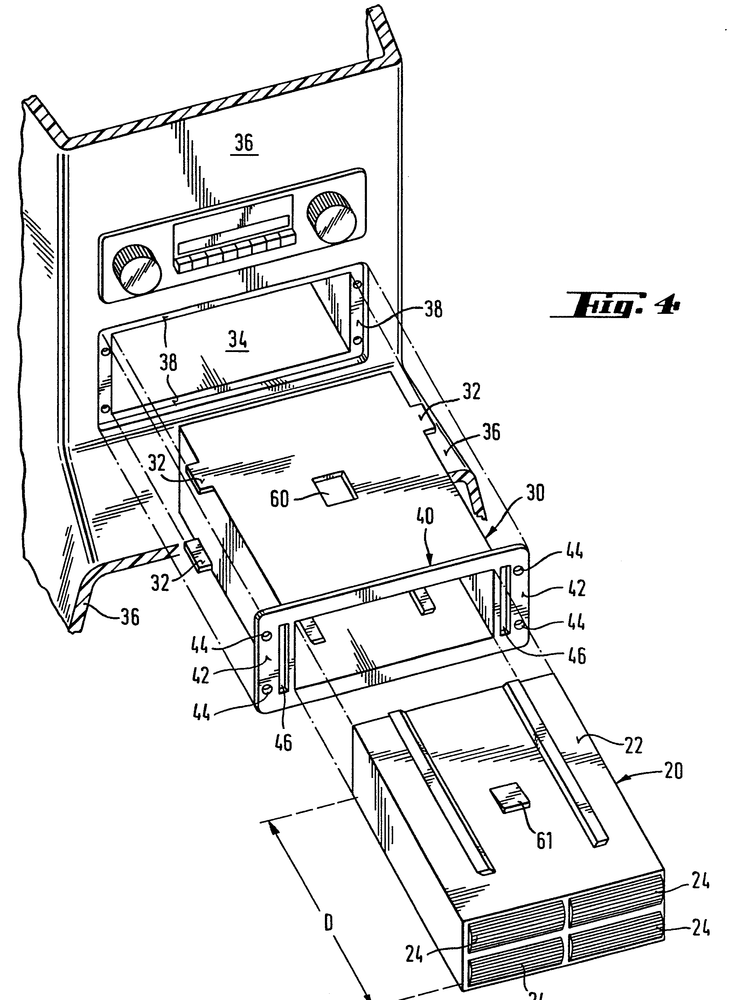

In Figur 4 erkennt man zunächst eine der erfindungsgemäßen Anordnungen, hier mit 20 bezeichnet, die gemäß Figur 2B ein Gehäuse 22 mit vier Schiebern 24 umfaßt, in denen je eine Compactkassette, mit ihrer längsten Seite parallel zur Gehäusetiefe D, unterbringbar ist. Auf der Oberseite des Gehäuses 22 befinden sich hinterschnittene Stapelschienen, denen auf der Unterseite (nicht erkennbar) Nuten mit komplementärem Querschnitt zugeordnet sind; auf diese Weise lassen sich identische Gehäuse formschlüssig zu Stapeln verbinden, wobei es auch möglich ist, solche für Compactkassetten mit solchen für Compactdiscs zu kombinieren, oder auch mit solchen, die für Mikrokassetten bestimmte Schieber enthalten. Eine Nase auf der Oberseite des Gehäuses dient als Entstapelungssperre. Zu erwähnen ist ferner die abgerundete Kontur der Schieberfronten, die als Aufprallschutz in Kraftfahrzeugen auch die Gehäusefrontkanten übergreifen.

0141112

Gehäuse und Schieber sind vorzugsweise Kunststoffspritzteile. Ebenso kann ein Adapter 30 aus Kunststoff gefertigt sein, der auf seiner Bodeninnenseite Stapelschienen entsprechend denen des Gehäuses 22 aufweist
und auf die das letztere aufschiebbar ist. Ebenso ist
eine Verankerungseintiefung 60 für die Nase 61 vorgesehen.

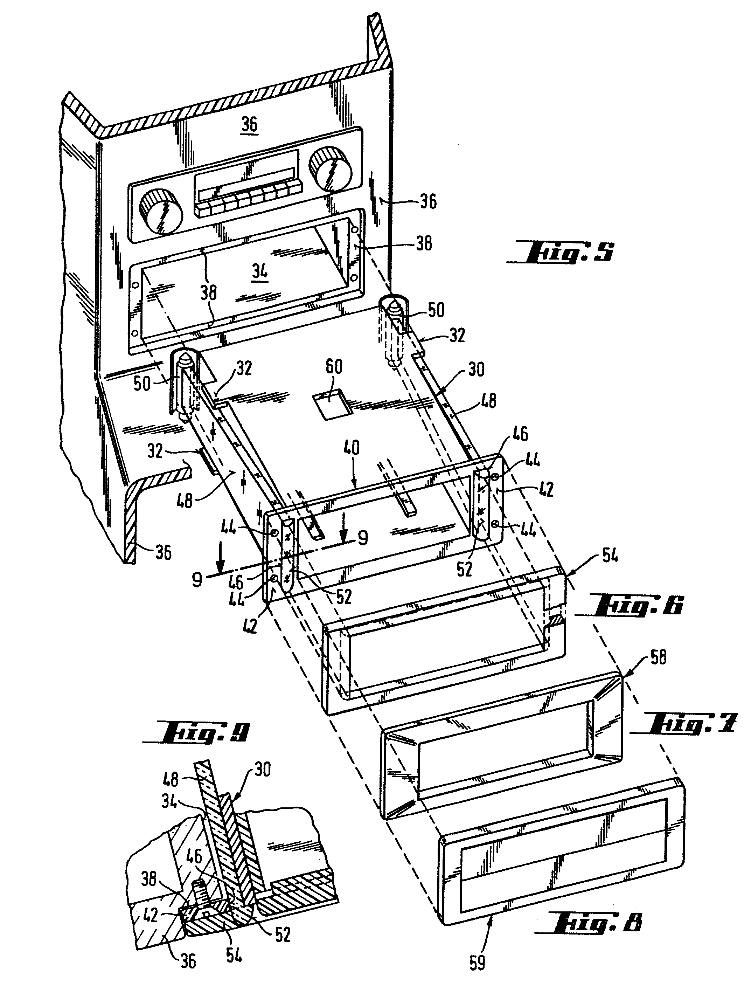

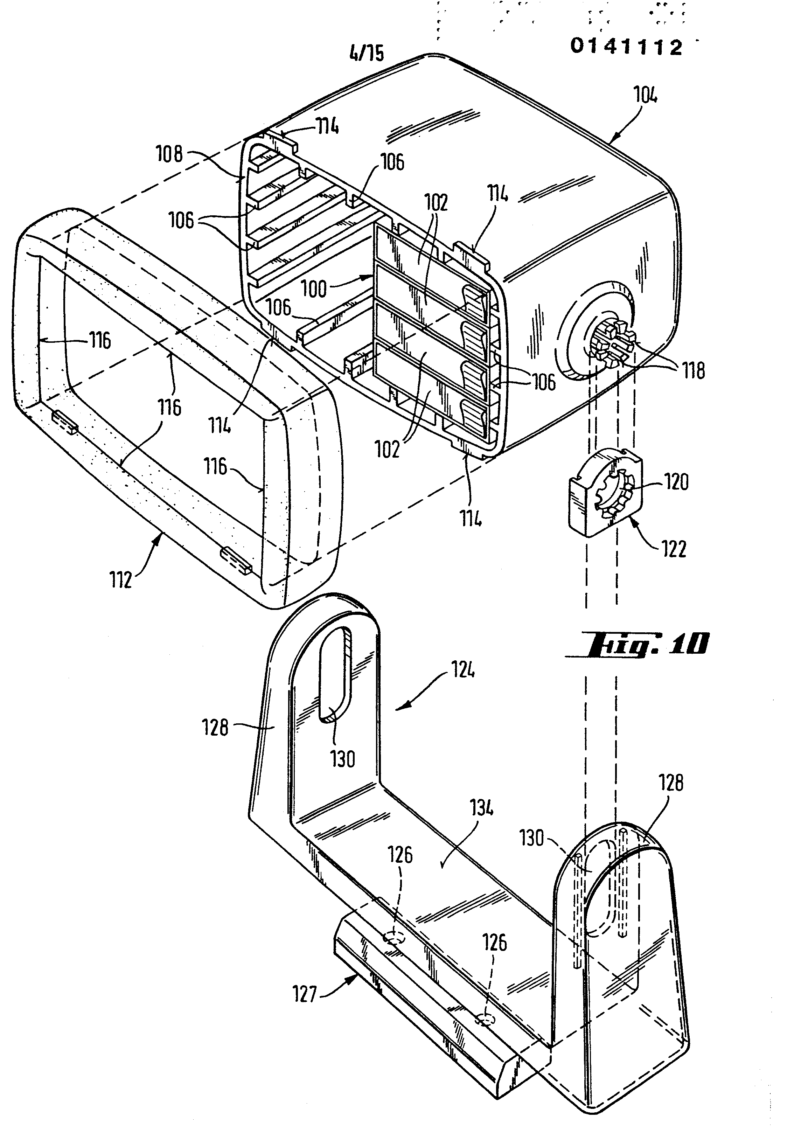

Der Adapter 30 besitzt äußere Verankerungselemente
32 zum Eingriff oder als Distanzstücke, wenn der
Adapter in einem Hohlraum 34 einer Kraftfahrzeug-
Innenverkleidung, etwa einer Mittelkonsole 36, montiert wird. Dieser Hohlraum ist von einer Eintiefung
38 umgeben, in die ein Rahmen 40 des Adapters paßt.
Dieser Rahmen umfaßt Flanschteile 42 mit Bohrungen
44 für Befestigungsschrauben. Zwischen den Bohrungen 44
und dem Innenraum des Adapters weisen die Flanschteile
42 Schlitzdurchbrüche 46 auf. In diese Durchbrüche
passen Lichtleiter 48 aus glasklarem Kunststoff (vgl.
auch Fig. 5 und 9), an deren adapterinneren Ende eine
Lichtquelle, beispielsweise eine Sofittenlampe 50,
angekoppelt ist. Durch (nicht dargestellte, aber für
den Fachmann an sich bekannte) Mittel sind die beiden
Sofittenlampen derart an das Bordnetz des Fahrzeugs
angeschlossen, daß sie normalerweise in Serienschaltung
über der Netzspannung liegen, bei Ausschub mindestens
eines Schiebers jedoch ein Umschalter betätigt wird,
mittels dem sie parallel an das Netz gelegt werden.
Demgemäß liefern sie bei geschlossenen Schiebern nur
eine gewisse Resthelligkeit von etwa einem Viertel
ihrer normalen Leistung, die jedoch dann zur Verfügung
steht, wenn die Anordnung benutzt wird. Die Form
der Lichtleiter 48 ergibt sich aus Fig. 5 und 9; ihre
Lichtaustrittsfläche 52 ragt über das betreffende
Flanschteil hinaus, dessen äußerer Rand von einer
Blende 54 kaschiert wird. Diese Blende ist in Fig. 6
perspektivisch gezeigt.

0141112

Wird keine Beleuchtungseinrichtung gemäss Fig. 5, 6 und 9 gewünscht, verwendet man einfach eine Blende, die die Flanschteile vollständig, also einschliesslich der Schlitzdurchbrüche 46, überdeckt; eine solche Blende 58 ist in Fig. 7 gezeigt.

59 Schliesslich kann noch eine Blende gemäss Fig. 8 vorgesehen sein, die den leeren Adapter völlig verschliesst, bevor eine Gehäuse-Schieber-Kombination eingefügt wird.

Es liegt im Rahmen der Erfindung, diese Konzeption auch dann beizubehalten, wenn ein Fahrzeug keine Innengestaltung aufweist, die an den Adapter angepasst ist. Auch an die Nachrüstung bereits vorhandener Fahrzeuge ist zu denken. In diesem Falle ist es vorgesehen, die Anordnung als nachträglich im Fahrzeug montierbares Magazin auszugestalten, wobei freilich gewisse Besonderheiten zu berücksichtigen sind. Ein solches Magazin ragt ja irgendwo in den Innenraum des Fahrzeugs, und es muss daher Sorge getragen werden, dass die Verletzungsgefahr bei einem etwa unfallbedingten Aufprall möglichst gering ist. Ferner sollte ein solches Magazin zumindest für den Fahrzeuglenker bequem erreichbar sein, unabhängig davon, wie und wo es im Fahrzeuginnern befestigt wird.

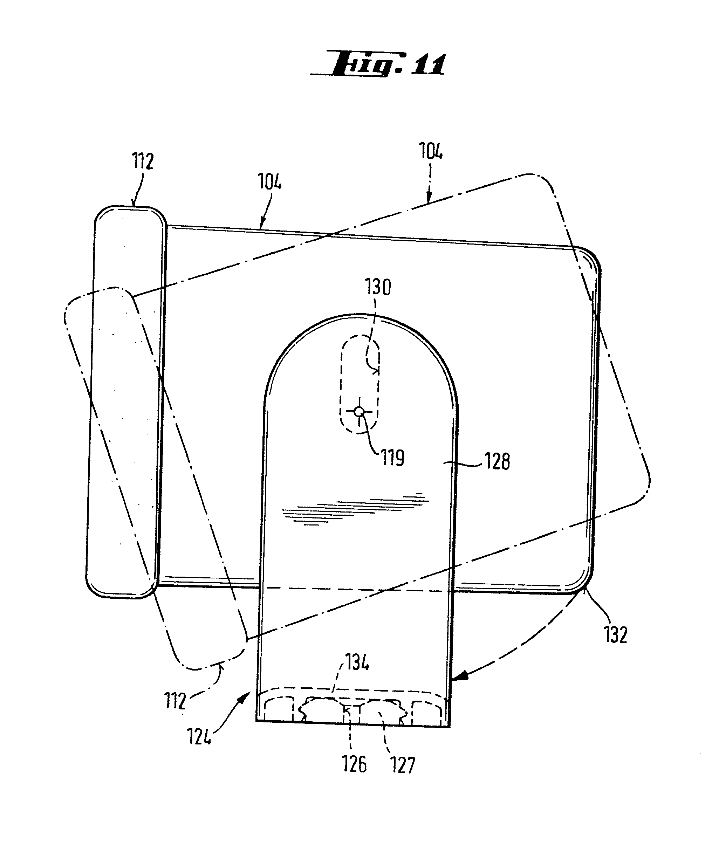

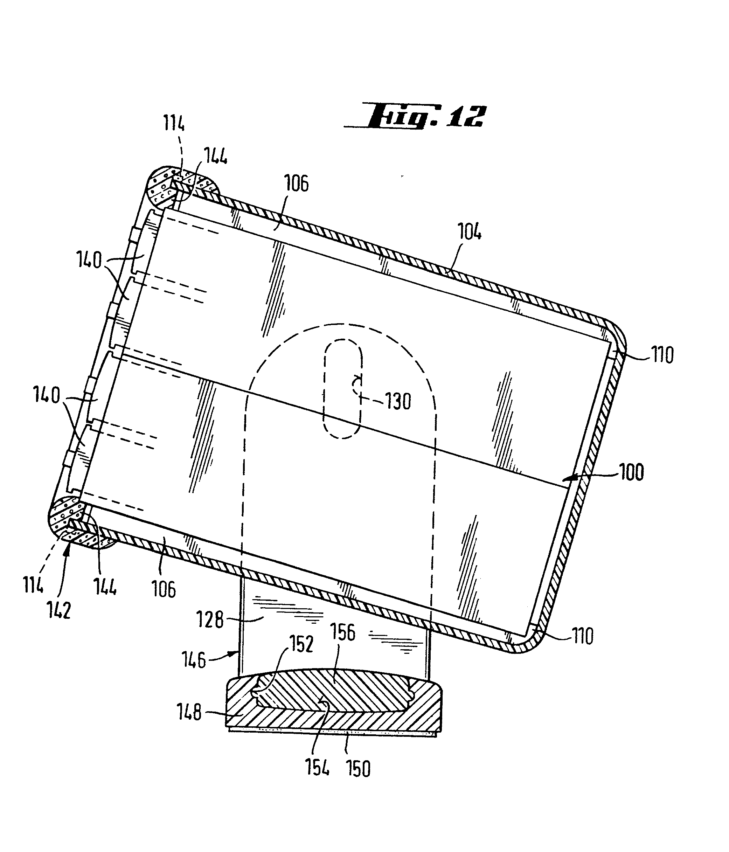

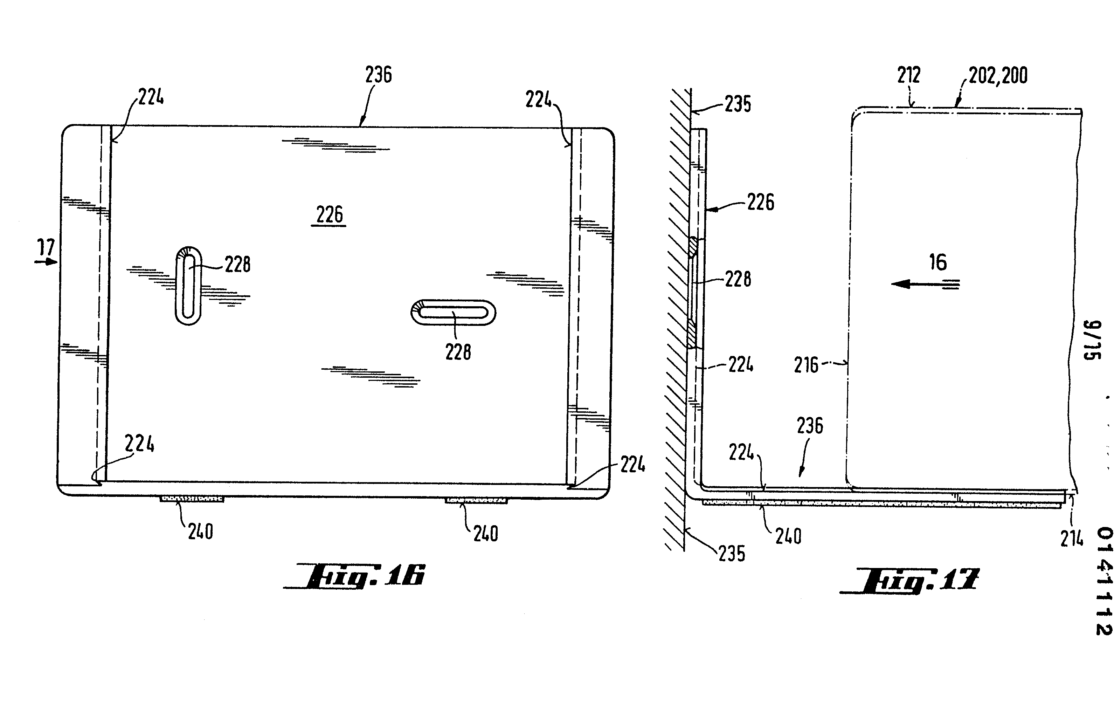

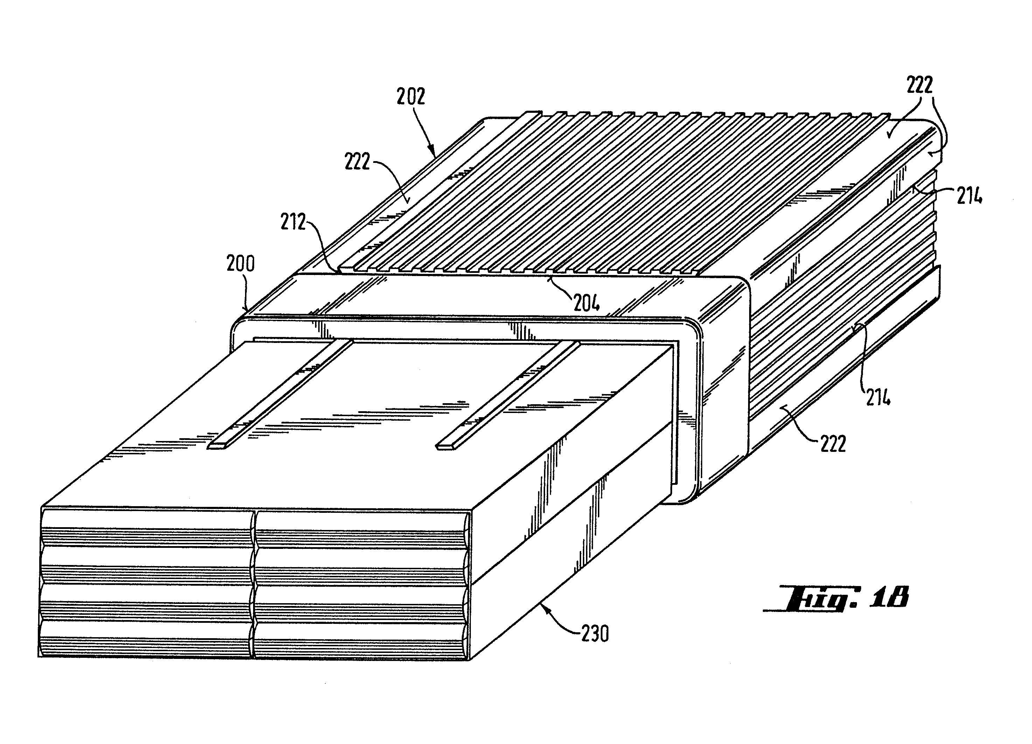

Ein derartiges Magazin ist in zwei Ausführungsformen in den Figuren 10 bis 14 dargestellt.

Man erkennt in Fig. 10 ein Halbgehäuse 100 mit vier Schiebern 102, deren Frontwände die offene Frontseite des Halbgehäuses abdecken und die durch Betätigen der seitlichen Taste auslösbar sind, so daß sie von einer innen untergebrachten Feder ausgeschoben werden können. Neben dem Halbgehäuse findet ein weiteres, gleichartiges Halbgehäuse Platz, das hier nicht gezeichnet ist, um den Innenaufbau des Rahmens 104 besser erkennbar zu machen. Es versteht sich, daß das Gehäuse für die Schieber einteilig oder mehrteilig sein kann, und daß im letzteren Falle die Gehäuseteile miteinander verbunden sein können, aber auch lose neben- oder übereinander in den Rahmen 104 eingefügt werden können.

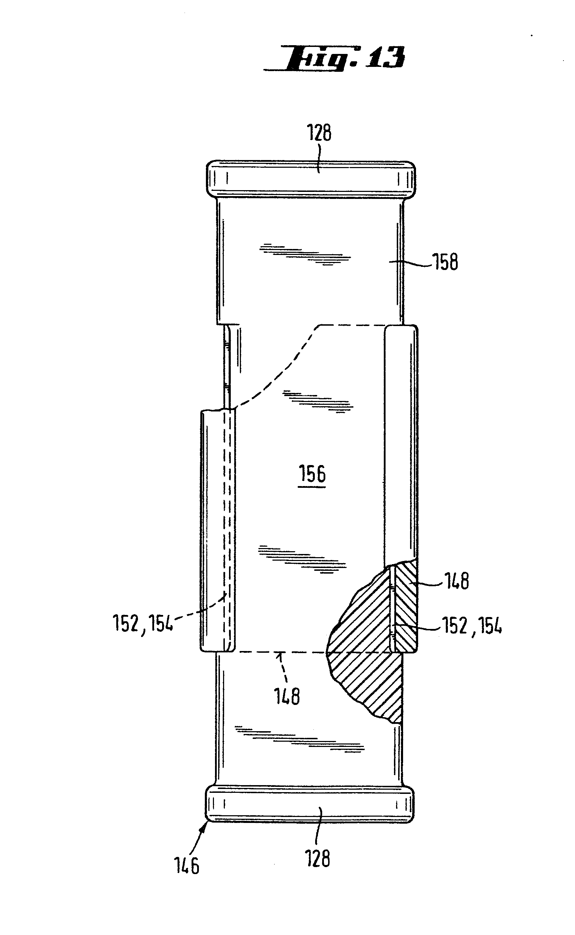

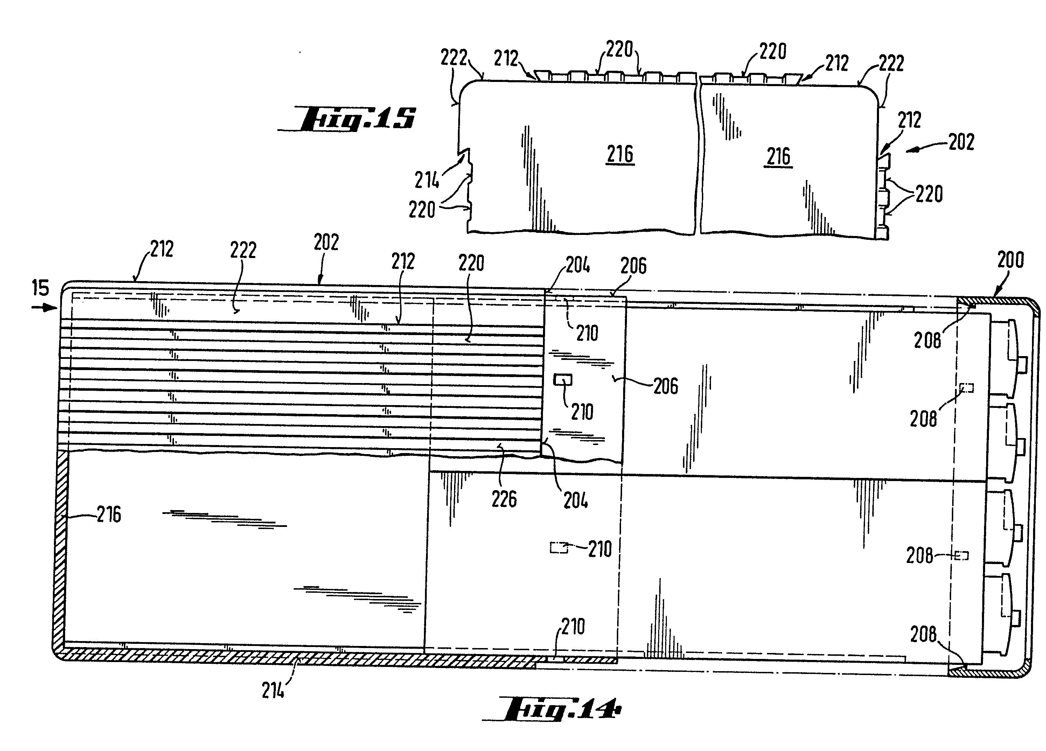

Während das Gehäuse quaderförmige Grundform aufweist, sind die Außenkonturen des Rahmens 104 sanft konvex abgerundet; damit das Gehäuse trotzdem sicher im Rahmen gehalten ist, sind an diesen entsprechend weit nach innen vorkragende Rippen 106 angeformt, die sich von der frontseitigen Kante 108 senkrecht zu dieser nach innen erstrecken und auch noch mindestens ein gewisses Stück weit längs der geschlossenen Rückwand herumgezogen sind (dies ist nur in Fig. 12 erkennbar, und dort ist das Rippenendstück mit 110 gekennzeichnet). Auf die Rahmenfrontkante wird die Polsterkrone 112 aufgeschoben, die sich an den von der Rahmenfrontkante nach außen ragenden Lappen 114 verankert. Ihr nach innen einkragender umlaufender Flansch 116 überdeckt den Spalt zwischen dem eingeschobenen Gehäuse 100 und der Rahmenfrontkante, behindert jedoch nicht den Ausschub der Schieber.

Seitlich sind an den Rahmen 104, der aus Hartkunststoff besteht, federnde Nabenteile 118 angespritzt, die in eine entsprechende Rasterung einer Lageröffnung 120 eines Schubsteins 122 greifen, so daß der Rahmen relativ zum Schubstein unter federnder Auslenkung der Nabenteile verdrehbar ist, wobei aber die Nabenteile in den komplementären Rasten des Schubsteins wieder ausfedern und so entsprechende Vorzugsstellungen definieren, in denen keine elastische Deformation vorliegt.

Die Baugruppe, bestehend aus Gehäuse(n), Rahmen, Polsterkrone und Schubsteinen wird von einem Bügel 124 getragen, der im wesentlichen U-förmig ist und mit seiner Basis lösbar in Löcher 126 eines Fusses 127 gesteckt ist, aus denen er bei Gewalteinwirkung herausreissbar ist, während der Fuss am Fahrzeug angeklebt oder angeschraubt bleibt. Die beiden Bügelschenkel 128 sind hohl ausgebildet, und der Hohlraum jedes Schenkels ist als Führung für den Schubstein derart ausgebildet, dass dieser längs des Schenkels verschieblich ist, jedoch reibungsgebremst. Von dem Hohlraum erstreckt sich ein Durchbruch nach innen in Richtung des Rahmens, und dieser Durchbruch hat die Form eines Langlochs 130, durch das hindurch die Nabenteile 118 in die Lageröffnung des Schubsteins einschnappbar sind. Der Schubstein ist vorher in den Hohlraum eingeschoben worden, und zwar von unten, wohin sich der Hohlraum öffnet.

Normalerweise sitzt die Achse 119, die die beiden von den Nabenteilen und Schubstein-Lageröffnungen definierten Lager durchsetzt, in Höhe des basisnäheren Endes des Langlochs 130, und zwar sowohl aus Stabilitäts- als auch aus ästhetischen Gründen. Damit alle denkbaren Montagebedingungen im Fahrzeug erfüllt werden können, muss die erwähnte Baugruppe aber um mindestens $90^{\circ}$ relativ zum Bügel verschwenkbar sein, und mit der Achse in der erwähnten Position würde die weiteste Ausladung des Rahmens, etwa die Hinterkante 132, beim Verdrehen an der Bügelbasis 134 anstossen. Deshalb kann man dann die Baugruppe längs der Langlöcher 130 nach oben ziehen, die Drehung ausführen und dann wieder nach unten stossen.

Soweit in der zweiten Ausführungsform die Bauteile den zum ersten beschriebenen gleichen, werden dieselben Bezugszeichen verwendet, und es werden nachstehend nur noch Details beziehungsweise Abwei- chungen von der ersten Ausführungsform beschrieben.

Zunächst ist zu erwähnen, dass die Schieberfrontwände 140 hier ein anderes Profil aufweisen, doch bildet dies keinen Gegenstand der vorliegenden Erfindung. Ferner erkennt man, dass die Polsterkrone 142 nicht nur den Spalt zwischen Rahmen und Gehäuse überdeckt, sondern mit einem Fortsatz 144 in diesen Spalt eingedrückt ist, wobei die Rippen 106 um eine entsprechende Strecke nach innen versetzt enden. Schliesslich ist auch die Schnappverbindung zwischen dem Bügel 146 und dem Fuss 148 abweichend gestaltet: Der Fuss, der auf seiner Unterseite eine Klebefolie 150 trägt, ist auf seiner Oberseite mit einer bei 152 hinterschnittenen Nut 154 versehen, in die ein entsprechend komplementär profilierter Mittelabschnitt 156 der Bügelbasis 158 eingedrückt ist.

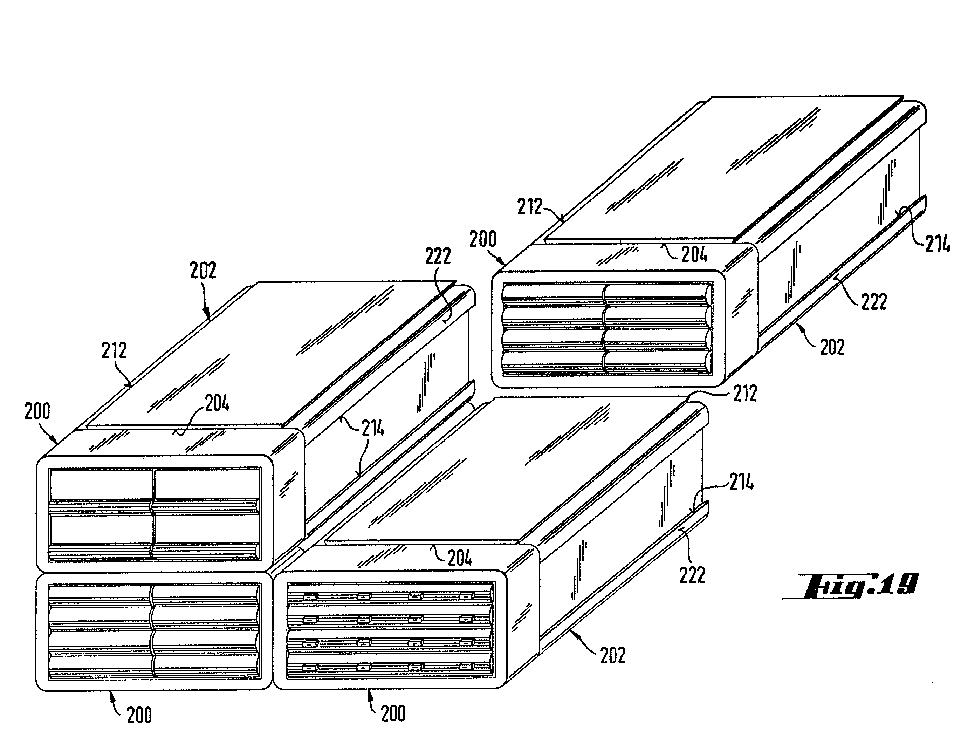

Die der Erfindung zugrundeliegende modulare Konzeption bedingt, dass die Gehäuse auf ihrer Aussenseite Formschlusselemente aufweisen, mittels denen sie sicher und stabil an andere Gehäuse anfügbar sind. Solche Formschlusselemente sind aber ästhetisch unbefriedigend, was bei den bisher beschriebenen Ausführungsformen nicht störte, da ja die betreffenden Gehäusewandungen verdeckt sind. Will man aber das System richtig nützen, sollte es auch für den Heimgebrauch ansprechend sein. In Weiterbildung der Erfindung werden demgemäss die in Fig. 14 bis 19 dargestellten Komponenten vorgesehen; es handelt sich dabei um Aussenrahmen, die einerseits ästhetisch befriedigen, andererseits ermöglichen können, dass ein Benutzer in seinem Fahrzeug und zu Hause über gleichartige Aufbewahrungssysteme verfügen kann.

Fig. 14 lässt einen solchen Aussenrahmen erkennen. Er besteht aus einem Frontrahmen 200, der die Gehäusefront umrahmt, aber den Schieberdurchtritt freilässt, und einem Rückrahmen 202 mit einer bei 204 abgestuften Haltekante 206, auf die der Frontrahmen aufschiebbar ist und sich durch Einschnappen seiner Nasen 208 in Eintiefungen oder Durchbrüchen 210 der Haltekante 206 verriegelt. Von der Stufe 204 ausgehend, erstrecken sich hinterschnittene Stapelkeile 212 und Stapelnuten 214 zur Rückwand 216 des Rück-

0141112

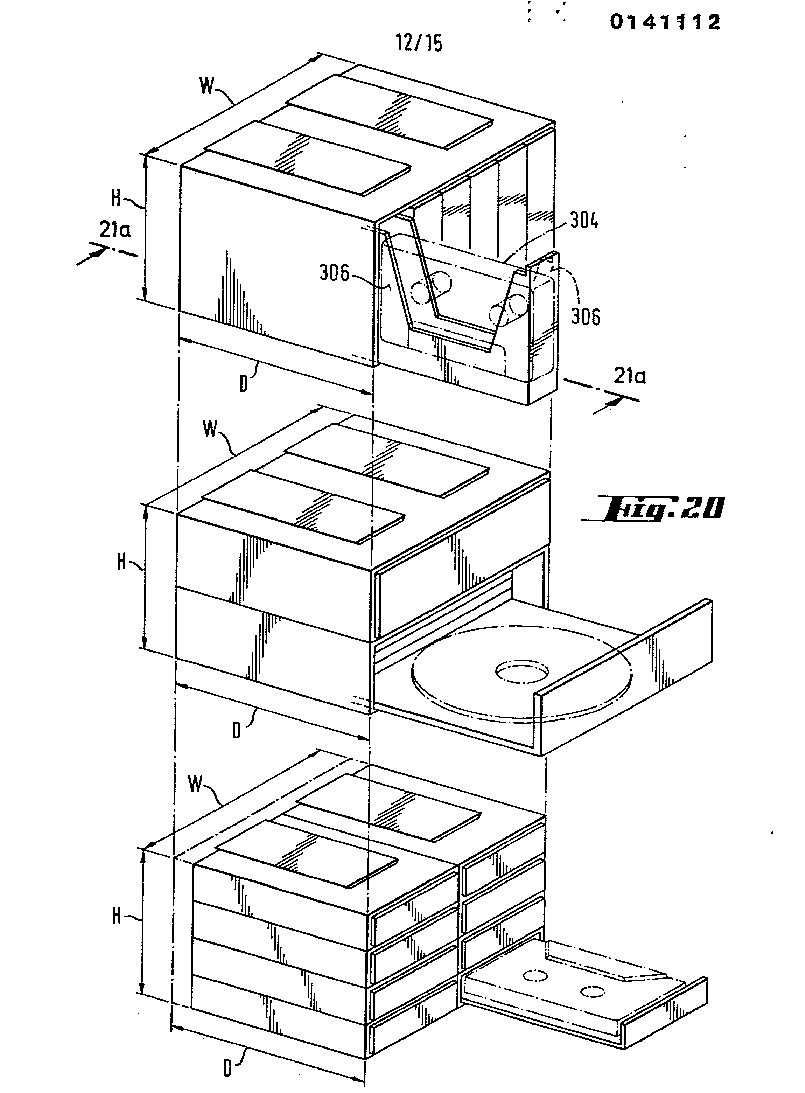

rahmens, die mit komplementären Stapelorganen gleichartiger Aussenrahmen formschlüssig zusammenschiebbar sind (Fig. 18 und 19).
Zum Kaschieren dieser Organe sind die Oberflächenbereiche zwischen
ihnen mit Rillungen 220 versehen, die sich parallel dazu erstrecken; die Kantenbereiche 222 dagegen bleiben glatt oder sind
nur schwach aufgerauht.

235
Ein Aussenrahmen ist auch an einer Wand montierbar, indem man
236
ihn mittels seiner Stapelorgane mit einem Winkel gemäss Fig. 16
und 17 kuppelt, der entsprechende komplementäre Stapelorgane
224 aufweist und in seiner Querwand 226 Anschraublöcher 228 besitzt.

In Fig. 18 ist                ein    Block   230 mit acht Compactkassettenschiebern in ein Aussengehäuse einsetzbereit dargestellt.
Man erkennt einige der Rillungen, die zur Vereinfachung nicht vollständig dargestellt wurden und in Fig. 19 ganz weggelassen sind.

Fig. 19 zeigt, wie an ein bereits drei Aussenrahmen umfassendes
Archiv durch einen vierten vervollständigt werden kann; einer
der Aussenrahmen enthält vier Schieber für Mikrokassetten, ein
weiterer vier Schieber für je vier Compactdiscs, und zwei weisen
je acht Schieber für Compactkassetten auf.

In Fig. 17 erkennt man noch an der Unterseite des Winkels Klebfolien oder Folienabschnitte 240, die den Winkel rutschsicher
auf einer glatten Stellfläche halten.

Fig. 20 zeigt ein weiteres Ausführungsbeispiel.
Es unterscheidet sich von den bisher behandelten in
zwei wesentlichen Punkten:

Zum ersten ist, wie im oberen Block gezeigt,
auch die Möglichkeit vorgesehen, Schieber zur Aufnahme von 8mm-Video-Kassetten ("VC 8") in das Gehäuse einzusetzen, in denen die Kassetten auf einer
ihrer längeren Schmalseiten stehend untergebracht sind,
und zwar -- im Gegensatz zu der Schieberausführung
für Mikrokassetten gemäß Fig. 1C, 2C, 3C -- ist
jeweils ein eigener Schieber für jede einzelne
Kassette vorgesehen.

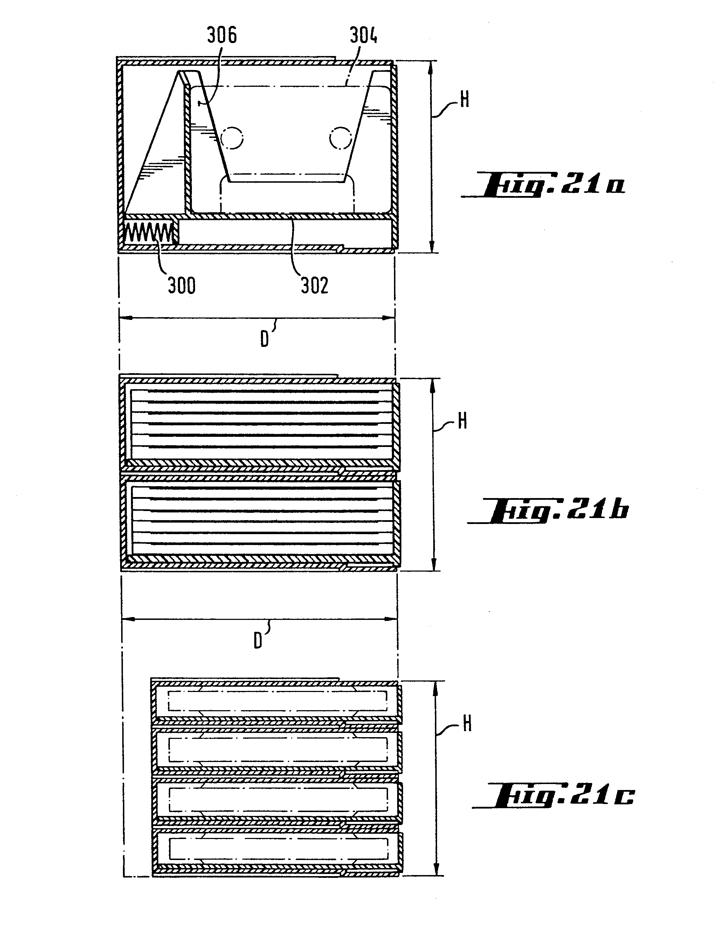

Die Schnittdarstellung nach Fig. 21a läßt erkennen, daß eine Ausschubfeder 300 unter der Bodenplatte 302 des Schiebers, auf der die Kassette 304
steht, vorgesehen ist, während die Seitenwände 306
des Schiebers beidseits tiefe Ausschnitte haben,
so daß die Kassette leicht erfaßt und entnommen
werden kann. Eine solche Ausführungsform wäre auch
bei Compactkassetten möglich, wobei jedoch zu beachten ist, daß im allgemeinen bei diesen im Schieber
Blockiernocken zum Eingriff in die Bandwickelkernnaben der Kassette vorgesehen werden, was bei der
liegenden Aufbewahrung gemäß Fig. 20, unterer Block,
einfacher zu verwirklichen ist.

Zum zweiten ist an diesem unteren Block erkennbar, daß die Tiefe "D", vorgegeben durch die
Compactdisc-Ausführung gemäß Fig. 20, mittlerer
Block, nicht vollständig ausgenützt wird; dies stört
aber nicht, wenn das Stapelsystem so gestaltet ist,
daß jedenfalls die sichtbare und zugängliche Frontseite immer bündig steht.

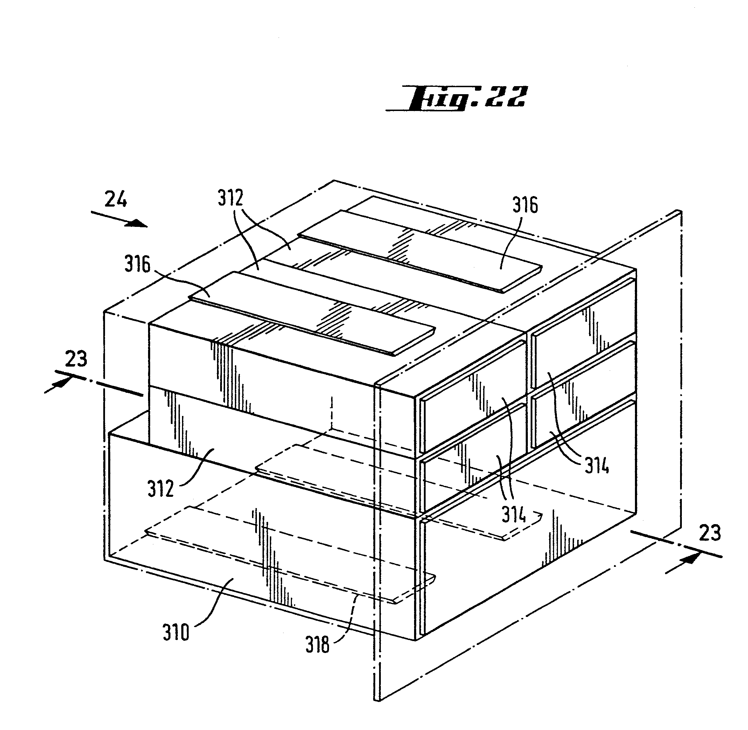

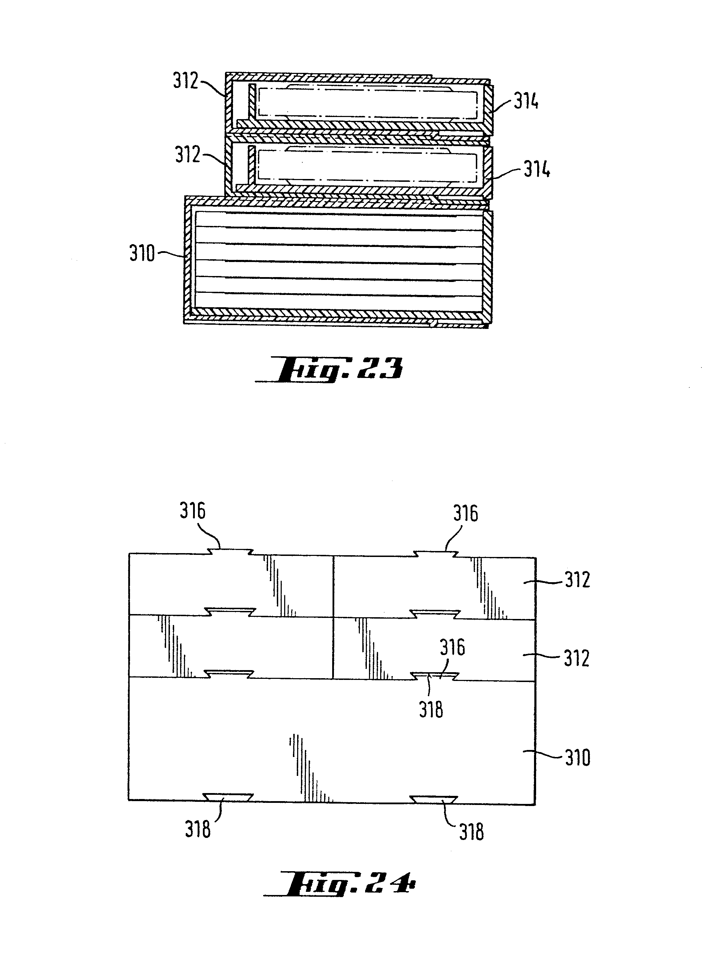

Dieses Stapelsystem ist in den Fig. 22 bis 24 dargestellt, wobei auf ein Compactdisc-Gehäuse 310 ein Compactkassetten-Gehäuse aufgesetzt ist. Man erkennt, daß das Compactkassetten-Gehäuse aus vier Untergehäusen 312 besteht, von denen jedes nur einen Schieber 314 aufnimmt. Auf Ober- und Unterseite aller Gehäuse sind Stapelschienen bzw. -nuten 316 bzw. 318 ausgebildet, und zwar zwei bei dem Disc-Gehäuse 310, eine bei den Kassettengehäuse 312. Die Schienen 316 erstrecken sich von der rückseitigen Endkante der Gehäuse nach vorn, enden aber in einem Abstand von der Frontkante des Gehäuses, und entsprechendes gilt für die Nuten 318; dieser Abstand ist dann bei den Gehäusen 310 und 312 gleich.

Wie man dem Schema der Fig. 20 entnimmt, ist der Höhenraumbedarf der stehenden Kassetten hier bestimmend für die modulare Höhe "H". Die Tiefe "D" erlaubt es, die Kassette auf ihrer längeren Schmalseite stehend anzuordnen. In einem solchen Modul lassen sich dann alternativ, wie dargestellt, unterbringen: Sechs VC-8-Schieber (oberer Block), zwei Compactdisc-Schieber (mittlerer Block), acht Compact-Kassetten in entweder vier Schiebern für je zwei Kassetten übereinander oder in acht Schiebern in zwei Vierergruppen nebeneinander.

Je nachdem, ob man die Compactdisc-Schieber mit seitlichen Führungen (bedingt größere Breite "W" ) oder mit Führungen im Bereich unter dem Schieber versieht, kann man in einem Schieber z.B. acht oder nur sechs Discs unterbringen, die je auf einem Halter liegen.

Patentansprüche
------------------------------------

1) Anordnung zum Aufbewahren von Compactkassetten oder Compactdiscs mit einem Gehäuse, das eine im wesentlichen offene Frontseite mit gegebener Breite und Höhe aufweist, durch die das aufbewahrte Gut mittels im Gehäuse geführter Schieber in eine bequeme Entnahmeposition förderbar ist, dadurch gekennzeichnet, daß das Gehäuse außen eine Breite und Tiefe entsprechend dem Durchmesser einer in einem Schieber liegenden Compactdisc aufweist, und daß das Gehäuse außen eine Höhe mindestens entsprechend der Dicke einer in einem Schieber flach liegenden Compactkassette besitzt.

2) Anordnung nach Anspruch 1, dadurch gekennzeichnet, daß das Gehäuse außen eine Höhe entsprechend einem ganzzahligen Vielfachen der Dicke einer Compactkassette besitzt.

3) Anordnung nach Anspruch 1, dadurch gekennzeichnet, daß in dem Gehäuse nebeneinander zwei Schieber für je eine Compactkassette vorgesehen sind, die in Richtung ihrer längsten Abmessung parallel zur Gehäusetiefe liegen.

4) Anordnung nach Anspruch 1, dadurch gekennzeichnet, daß in dem Gehäuse ein Schieber für zwei nebeneinander mit ihrer längsten Abmessung parallel zur Gehäusetiefe liegende Compactkassetten vorgesehen ist.

5) Anordnung nach Anspruch 2, dadurch gekennzeichnet, daß das Gehäuse außen eine Höhe entsprechend der Dicke von zwei Compactkassetten aufweist und in ihm Schieber zur Aufnahme von Mikrokassetten untergebracht sind, die in den Schieber auf ihrem Kopfspiegel stehen.

6) Anordnung nach Anspruch 5, dadurch gekennzeichnet, daß ein Schieber zur Aufnahme von zwei Reihen nebeneinanderstehender Mikrokassetten vorgesehen ist.

7) Anordnung nach Anspruch 5, gekennzeichnet durch zwei nebeneinander im Gehäuse vorgesehene Schieber.

8) Anordnung nach Anspruch 1, dadurch gekennzeichnet, daß das Gehäuse mit weiteren identischen Gehäusen formschlüssig stapelbar ist.

9) Anordnung nach Anspruch 2 oder 5, gekennzeichnet durch ein einstückiges Gehäuse.

10) Anordnung nach Anspruch 1, gekennzeichnet durch einen zur Aufnahme des Gehäuses bemessenen Adapter mit die Gehäusefrontseite umrahmenden Flanschteilen, die an einer Wandung befestigbar sind.

11) Anordnung nach Anspruch 10, gekennzeichnet durch eine die Flanschteile abdeckende Blende.

12) Anordnung nach Anspruch 10, gekennzeichnet durch eine Beleuchtungseinrichtung für die Gehäusefrontseite.

13) Anordnung nach Anspruch 12, dadurch gekennzeichnet, daß die Beleuchtungseinrichtung eine Mehrzahl elektrischer Glühlampen umfaßt, die bei eingeschobenen Schiebern in Serie und bei Auszug mindestens eines Schiebers parallel an eine Stromversorgungsquelle angeschlossen sind.

14) Anordnung nach Anspruch 12, dadurch gekennzeichnet, daß Lichtleiter zum Übertragen des von einer Lichtquelle erzeugten Lichts zu einer Lichtaustrittsfläche nahe der Gehäusefrontseite vorgesehen sind.

15) Anordnung nach Anspruch 1, dadurch gekennzeichnet, daß die offene Gehäusefrontseite durch Frontplatten der Schieber im wesentlichen völlig abgedeckt sind und daß diese Frontplatten ein die Gehäusefrontkanten übergreifendes abgerundetes Profil aufweisen.

16) Anordnung nach Anspruch 1, gekennzeichnet durch einen Rahmen, in den Gehäuse einschiebbar sind und an dem sie sich über an die Rahmeninnenseite angeformte Rippen abstützen, wobei der Rahmen mit einem Befestigungsfuß verbunden ist und der Spalt zwischen der Rahmenfrontkante und der Gehäusekontur durch eine Polsterkrone abgedeckt ist.

17) Anordnung nach Anspruch 16, dadurch gekennzeichnet, daß der Rahmen relativ zum Fuß um eine etwa durch seinen Schwerpunkt verlaufende Achse verdrehbar ist.

18) Anordnung nach Anspruch 16, dadurch gekennzeichnet, daß der Rahmen und der Fuß mittels eines lösbaren Kraftschlusses verbunden sind.

19) Anordnung nach Anspruch 16, 17 und 18, dadurch gekennzeichnet, daß der Rahmen in einem Bügel mit U-Grundform drehbar gelagert ist und der Bügel mittels einer Schnappverbindung an den Fuß angesetzt ist.

20) Anordnung nach Anspruch 17, dadurch gekennzeichnet, daß der Rahmen in ausgewählten Winkellagen arretierbar ist.

21) Anordnung nach Anspruch 8, gekennzeichnet durch einen die Stapelorgane der Gehäuse abdeckenden Aufstellrahmen, der seinerseits Stapelorgane zur formschlüssigen Verbindung mit weiteren gleichartigen Aufstellrahmen aufweist.

22) Anordnung nach Anspruch 21, gekennzeichnet durch einen mit dem Aufstellrahmen formschlüssig kuppelbaren Befestigungswinkel.

23) Anordnung nach Anspruch 21, dadurch gekennzeichnet, daß der Aufstellrahmen auf seinen Außenseiten parallel zur Schieberbewegungsrichtung verlaufende Stapelkeile und Stapelnuten aufweist, und daß dazwischenliegende Oberflächenbereiche mit dazu parallelverlaufenden Rillungen vorgesehen sind.

24) Anordnung zum Aufbewahren von Magnetbandkassetten (Compactkassetten oder 8mm-Video-Kassetten) oder Compactdiscs mit einem Gehäuse, das eine im wesentlichen offene Frontseite mit gegebener Breite und Höhe aufweist, durch die das aufbewahrte Gut mittels im Gehäuse geführter Schieber in eine bequeme Entnahmeposition förderbar ist, dadurch gekennzeichnet, daß das Gehäuse außen eine Breite und Tiefe entsprechend dem Durchmesser einer in einem Schieber liegenden Compactdisc aufweist, und daß das Gehäuse außen eine Höhe entsprechend dem Höhenraumbedarf einer im Schieber auf einer ihrer Schmalseiten stehenden Kassette aufweist.

25) Anordnung nach Anspruch 24, dadurch gekennzeichnet, daß jeder Kassette ein eigener Schieber zugeordnet ist.

26) Anordnung nach Anspruch 24, dadurch gekennzeichnet, daß die Schieber zur Aufnahme von Kassetten auf ihrer längeren Schmalseite stehend ausgebildet sind.

27) Anordnung nach Anspruch 1 und Anspruch 24, dadurch gekennzeichnet, daß in dem Gehäuse alternativ Schieber zur stehenden Aufbewahrung von Kassetten nebeneinander oder Schieber zur liegenden Aufbewahrung von Kassetten übereinander unterbringbar sind.

28) Anordnung nach Anspruch 27, dadurch gekennzeichnet, daß in einem Gehäuse alternativ
- zwei Schieber für Compactdiscs,
- sechs Schieber für stehende Kassetten, oder
- zwei nebeneinander angeordnete Gruppen von vier übereinander angeordneten Schiebern für liegende Kassetten
unterbringbar sind.

29) Anordnung nach Anspruch 28, dadurch gekennzeichnet, daß jeder Compactdisc-Schieber für die Aufbewahrung von sechs Discs ausgebildet ist.

30) Anordnung nach Anspruch 28, dadurch gekennzeichnet, daß jeder Compactdisc-Schieber für die Aufbewahrung von acht Discs ausgebildet ist.

31) Anordnung nach Anspruch 1, dadurch gekennzeichnet, daß das Gehäuse mit weiteren Gehäusen stapelbar ist, die gleiche Breite und Höhe, jedoch geringere Tiefe besitzen.

32) Anordnung nach Anspruch 1, dadurch gekennzeichnet, daß das Gehäuse mit weiteren Gehäusen stapelbar ist, die gleiche Höhe und halbe Breite besitzen.

33) Anordnung nach Anspruch 32, dadurch gekennzeichnet, daß die weiteren Gehäuse geringere Tiefe besitzen.

34) Anordnung nach Anspruch 31, 32 oder 33, dadurch gekennzeichnet, daß alle Gehäuse frontbündig stapelbar sind.

Fig. 1A

Fig. 1B

Fig. 1C

Fig. 2A

Fig. 2B

Fig. 2C

Fig. 3A

Fig. 3B

Fig. 3C

1/15

0141112

0141112

Fig. 4

Fig.5

Fig.6

Fig.7

Fig.8

Fig.9

**Fig. 10**

0141112

## Fig. 11

*Fig. 12*

**Fig. 13**

0141112

Fig.14

Fig.15

Fig. 16

Fig. 17

0141112

Fig. 18

0141112

Fig.19

0141112

12/15

Fig. 20

306    304

*Fig. 21a*

H

300    302

D

*Fig. 21b*

H

D

*Fig. 21c*

H

0141112

**Fig.22**

312

314

312

314

310

_Fig. 23_

316

316

312

312

316

318

310

318

318

_Fig. 24_

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-4 275 943 (A. GELARDI et al.) * Spalte 10, Zeilen 22-54; Figuren 1,2 * | 7,8 | G 11 B 23/023 |
| A | GB-A-2 011 354 (IDN) * Seite 1, Zeilen 1-57; Seite 2, Zeilen 55-76; Figuren 1,6,7 * | 16,17 | |
| A | US-A-4 231 625 (J.L. PEREZ et al.) * Spalte 2, Zeilen 59-66; Figur 11 * | 12 | |
| A | US-A-4 285 557 (A. PALADINO et al.) * Zusammenfassung * | | |
| D,A | DE-C-2 248 408 (IDN) | | |

-----

**RECHERCHIERTE SACHGEBIETE (Int. Cl.4)**

G 11 B 23/00
B 60 R 7/00
B 60 R 11/02
B 65 D 85/00

Der vorliegende Recherchenbericht wurde für alle Patentansprüche erstellt.

| Recherchenort BERLIN | Abschlußdatum der Recherche 30-10-1984 | Prüfer ROGNONI M.G.L. |
|---|---|---|